# EUROPEAN PATENT APPLICATION

(11) **EP 3 024 231 A1**
(43) Date of publication of application: **25.05.2016**
(21) Application number: 14306852.6
(22) Date of filing: 21.11.2014
(51) Int. Cl.: H04N 13/04

(54) **A method, apparatus and system for correcting for errors of stereoscopic displays**

(71) Applicant: Thomson Licensing, 92130 Issy-les-Moulineaux (FR)
(72) Inventor: Borel, Thierry, 35576 Cesson-Sévigné (FR)
(74) Representative: Perrot, Sébastien

(57) **Abstract**

The present principles provide a method, apparatus and system for locally correcting angular errors due to displacement when placing micro-lenses/barriers on a display by shifting the views at a sub-pixel level using higher resolution panels. In such panels, instead of having one sub-pixel to generate one view, there are more than one sub-pixels used to generate one view. The sub-pixels are grouped differently depending on their position on the screen to compensate for bad positioning of lenses (barriers) on the glass of a display.

## Description

### TECHNICAL FIELD

The present principles relate to stereoscopic displays. More particularly, the present principles relate to a method, apparatus and system for correcting for errors of auto stereoscopic displays.

### BACKGROUND

One of the reasons why 3DTV has not developed into the consumer premises as initially expected is that viewers generally have to wear 3D stereo glasses, whether they be passive or active glasses. In the past few years however, display manufacturers started to develop auto-stereoscopic 3D displays (AS-3D) using either parallax barriers or micro-lens arrays. Unfortunately, for such displays, manufacturing constraints lead to poor quality optics and poor 3D effects.

### SUMMARY

The present principles propose a method, apparatus and system for correcting for errors of stereoscopic displays.

In one embodiment of the present principles a method of the present principles includes determining a shift in sub-pixels for at least one view of the display required to correct for errors in the placement of at least one of lenses of a lens array and a parallax barrier on the glass of the display using information regarding the errors in the placement of the at least one of the lenses of the lens array and the parallax barrier on the glass of the display and reproducing images on the display using the determined, shifted sub-pixels for the at least one view.

Advantageously, the information derives from a look up table including a displacement map of the errors in the placement of at least one of the lenses of the lens array and the parallax barrier on the display.

According to a specific characteristic, determining a shift comprises estimating an amount of a sub-pixel shift for the at least one view of the display dependent on an amount of placement error for at least one of the lenses of the lens array and the parallax barrier associated with the view.

According to a further characteristic, the information derives from measurements of a 3D image effect for images of the at least one view of the display.

In an advantageous way, the determining comprises performing a trial and error process to determine the shift in sub-pixels.

According to another characteristic, trial and error process comprises performing a sub-pixel shift for a view; reproducing images on the display using the shifted sub-pixels; measuring a 3D image effect for images of the view; and repeating the performing and measuring steps until a best 3D image effect is measured.

Advantageously, a best 3D image effect comprises an image with a maximum 3D image contrast as compared with images displayed using any other respective sub-pixel combination for a view.

In an alternate embodiment of the present principles, an apparatus of the present principles includes a memory for storing at least one of program routines, information regarding errors in the placement of at least one of lenses of a lens array and a parallax barrier on a glass of the display and data and a processor for executing the program routines. In such an embodiment the processor is configured to determine a shift in sub-pixels for at least one view of the display required to correct for errors in the placement of at least one of lenses of a lens array and a parallax barrier on the glass of the display using information regarding the errors in the placement of the at least one of the lenses of the lens array and the parallax barrier on the glass of the display and reproduce images on the display using the determined, shifted sub-pixels for the at least one view.

In an alternate embodiment of the present principles, an apparatus of the present principles includes means for determining a shift in sub-pixels for at least one view of the display required to correct for errors in the placement of at least one of lenses of a lens array and a parallax barrier on the glass of the display using information regarding the errors in the placement of the at least one of the lenses of the lens array and the parallax barrier on the glass of the display; and means for reproducing images on the display using the determined, shifted sub-pixels for the at least one view.

Advantageously, the apparatus comprises an integrated component of said display.

According to a specific characteristic, the apparatus comprises a display controller.

According to another characteristic, the apparatus receives a look up table including a displacement map of the errors in the placement of at least one of the lenses of the lens array and the parallax barrier to use to determine a shift in sub-pixels.

In an advantageous way, the apparatus receives measurements of a 3D image effect for images of at least one view of the display to use to determine the shift in sub-pixels.

In an alternate embodiment, a system of the present principles includes a measurement device measuring 3D image effects of images reproduced on the display, a device positioning the measurement device and an apparatus including a memory for storing at least one of program routines, information regarding errors in the placement of at least one of lenses of a lens array and a parallax barrier on a glass of the display and data and a processor for executing said program routines. In an embodiment of a system of the present principles, the apparatus is configured to determine a shift in sub-pixels for at least one view of the display required to correct for errors in the placement of at least one of lenses of a lens array and a parallax barrier on the glass of the display using at least the measured 3D image effects and reproduce images on the display using the determined, shifted sub-pixels for the at least one view.

Advantageously, the measurement device is based on a Fourier Optics concept.

According to an embodiment, the electro-mechanical device incrementally moves the measurement device by one sub-pixel from a current pixel position individually in both a horizontal and a vertical direction to enable the measurement device to capture images from different positions of the display.

The present principles also relates to a computer program product comprising instructions of program code for execution by at least one processor to perform the method for correcting for errors of a display, when the program is executed on a computer.

The present disclosure also relates to a processor readable medium having stored therein instructions for causing a processor to perform the method for correcting for errors of a display.

### BRIEF DESCRIPTION OF THE DRAWINGS

The teachings of the present principles can be readily understood by considering the following detailed description in conjunction with the accompanying drawings, in which:
FIG.1 depicts a high level block diagram of an arrangement of micro-lenses on the glass of a theoretical AS-3D display, the micro-lenses having perfect placement;
FIG. 2 depicts a high level block diagram of an arrangement of micro-lenses on the glass of a manufactured AS-3D display, the placement of the micro-lenses containing errors;
FIG. 3 depicts a high level block diagram of an arrangement of micro-lenses on the glass of a theoretical ultra-high-definition (UHD) AS-3D display, the micro-lenses having perfect placement;
FIG. 4 depicts a high level block diagram of an arrangement of micro-lenses on the glass of a manufactured UHD AS-3D display, the placement of the micro-lenses containing errors;
FIG. 5 depicts a high level block diagram of the UHD AS-3D display of FIG. 4 in which an embodiment of the present principles has been applied to correct for incorrect placement of the micro-lenses of the UHD display in accordance with an embodiment of the present principles;
Fig. 6 depicts a high level block diagram of an apparatus for correcting for errors of stereoscopic displays in accordance with an embodiment of the present principles;
FIG. 7 depicts a measurement system for measuring effects of a displacement of lenses of a lens array/parallax barrier on the glass of a display in accordance with an embodiment of the present principles; and
FIG. 8 depicts a flow diagram for a method for correcting for errors of stereoscopic displays in accordance with an embodiment of the present principles.

It should be understood that the drawing(s) are for purposes of illustrating the concepts of the various described principles and are not necessarily the only possible configuration for illustrating the principles.

To facilitate understanding, identical reference numerals have been used, where possible, to designate identical elements that are common to the figures.

### DETAILED DESCRIPTION

Embodiments of the present principles advantageously provide a method, apparatus and system for correcting for errors of stereoscopic displays. Although the present principles will be described primarily within the context of specific displays having detailed resolutions, the specific embodiments of the present principles should not be treated as limiting the scope of the invention. It will be appreciated by those skilled in the art and informed by the teachings of the present principles that the concepts of the present principles can be advantageously applied to any display having errors that can be corrected in accordance with the embodiments of the present principles described and alluded to herein.

In the claims hereof, any element expressed as a means for performing a specified function is intended to encompass any way of performing that function including, for example, a) a combination of circuit elements that performs that function or b) software in any form, including, therefore, firmware, microcode or the like, combined with appropriate circuitry for executing that software to perform the function. The present principles as defined by such claims reside in the fact that the functionalities provided by the various recited means are combined and brought together in the manner which the claims call for. It is thus regarded that any means that can provide those functionalities are equivalent to those shown herein.

Moreover, all statements herein reciting principles, aspects, and embodiments of the present principles, as well as specific examples thereof, are intended to encompass both structural and functional equivalents thereof. Additionally, it is intended that such equivalents include both currently known equivalents as well as equivalents developed in the future, i.e., any elements developed that perform the same function, regardless of structure.

The functions of the various elements shown in the figures can be provided through the use of dedicated hardware as well as hardware capable of executing software in association with appropriate software. When provided by a processor, the functions can be provided by a single dedicated processor, by a single shared processor, or by a plurality of individual processors, some of which can be shared. Moreover, explicit use of the term "processor" or "controller" should not be construed to refer exclusively to hardware capable of executing software, and can implicitly include, without limitation, digital signal processor ("DSP") hardware, read-only memory ("ROM") for storing software, random access memory ("RAM"), and non-volatile storage. Moreover, all statements herein reciting principles, aspects, and embodiments of the present principles, as well as specific examples thereof, are intended to encompass both structural and functional equivalents thereof. Additionally, it is intended that such equivalents include both currently known equivalents as well as equivalents developed in the future (i.e., any elements developed that perform the same function, regardless of structure).

Thus, for example, it will be appreciated by those skilled in the art that the block diagrams presented herein represent conceptual views of illustrative system components and/or circuitry embodying the principles of the invention. Similarly, it will be appreciated that any flow charts, flow diagrams, state transition diagrams, pseudocode, and the like represent various processes which may be substantially represented in computer readable media and so executed by a computer or processor, whether or not such computer or processor is explicitly shown.

Furthermore, because some of the constituent system components and methods depicted in the accompanying drawings can be implemented in software, the actual connections between the system components or the process function blocks may differ depending upon the manner in which the present principles are programmed. Given the teachings herein, one of ordinary skill in the pertinent art will be able to contemplate these and similar implementations or configurations of the present principles.

Embodiments of the present principles provide a method, apparatus and system for correcting for errors of stereoscopic displays which takes advantage of additional sub-pixels available in higher resolution displays (e.g., 4K, 8K). In accordance with the present principles, additional sub-pixels available when manufacturing higher resolution displays are used to correct, for example, lens/barriers array placement errors instead of increasing the number of views, which degrades the 3D effects.

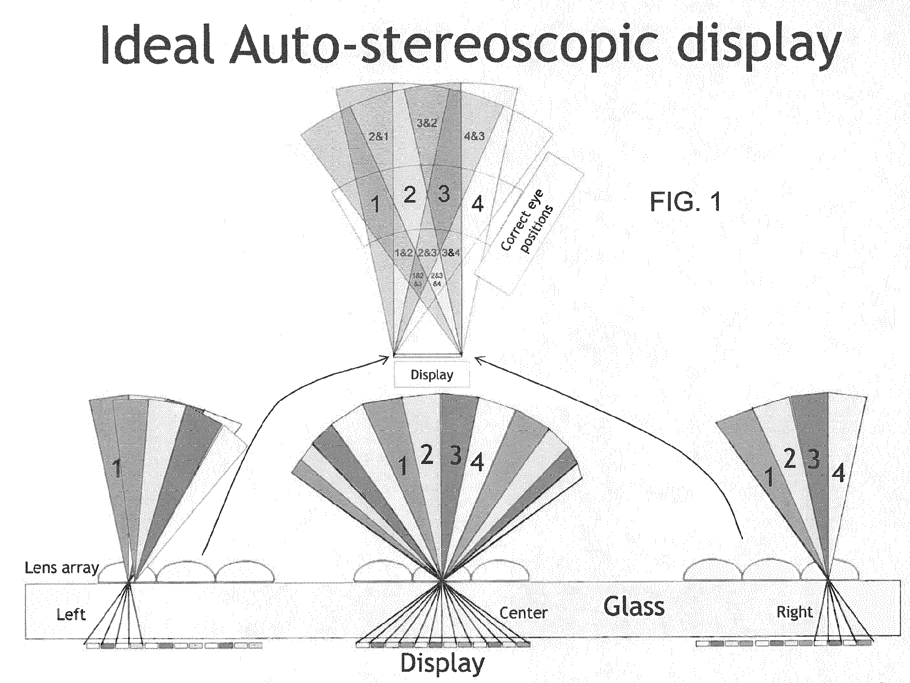

FIG.1 depicts a high level block diagram of an arrangement of micro-lenses on the glass of a theoretical AS-3D display, the micro-lenses having perfect placement. That is, the AS-3D display 100 of FIG. 1 illustratively comprises a glass panel 102, a plurality of micro-lenses, collectively 104 and a plurality of pixels, collectively 106. The example of FIG. 1 comprises a 4-view display in which one sub-pixel is used for one view. As depicted in the overview depiction of FIG. 1, with perfect placement of the micro-lenses, each view (1-4), whatever the pixel position on the panel, is converging into an optimum area (e.g., correct eye position) for viewing 3D.

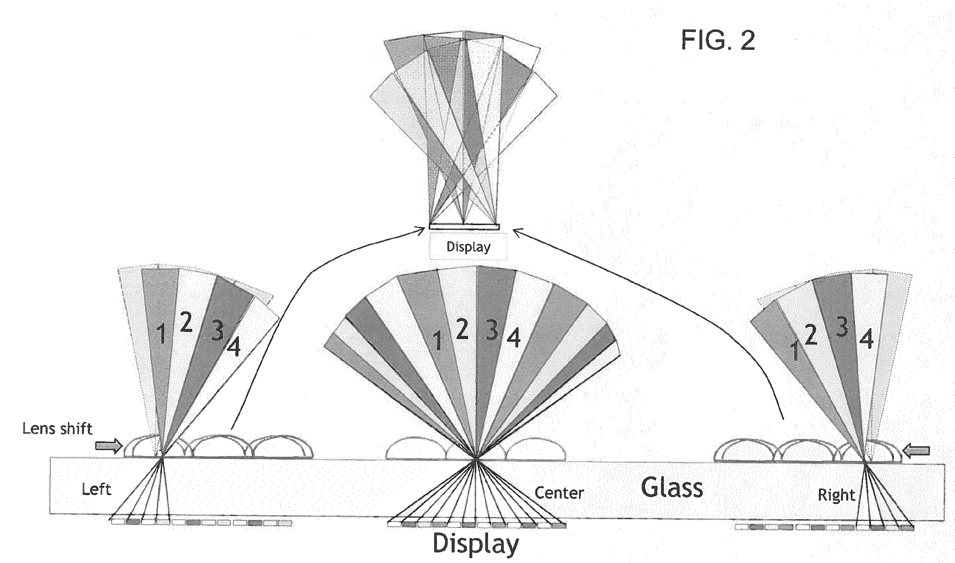

FIG. 2 depicts a high level block diagram of an arrangement of micro-lenses on the glass of a manufactured AS-3D display, the placement of the micro-lenses containing errors. The AS-3D display 200 of FIG. 2 illustratively comprises a glass panel 202, a plurality of micro-lenses, collectively 204 and a plurality of pixels, collectively 206. The example of FIG. 2 comprises a 4-view display in which one sub-pixel is used for one view. In the AS-3D display of FIG. 2, due to placement errors, the side lenses are shifted versus theoretical position, creating double image issues and crosstalk between views as depicted in the overview depiction of FIG. 2. More specifically, auto stereoscopic displays suffer from poor optical quality because the difficulties in aligning a lens on top of a LCD panel with a precision of less than 10 microns.

In at least one embodiment of the present principles, the angular errors in the placement of micro-lenses or barriers on the glass (LCD) of a display, such as an AS-3D display, due to placement errors are corrected by shifting N views at a sub-pixel level using higher resolution panels. More specifically, there is a trend in the industry to increase the resolution of a display panel to 4K and even 8K, which respectively increases the resolution by 4 or 16 versus classical HDTV display panels. As such, embodiments of the present principles propose a solution to correct the incorrect positioning of at least some of the lenses (or barriers) of the array by taking advantage of very high resolution panels.

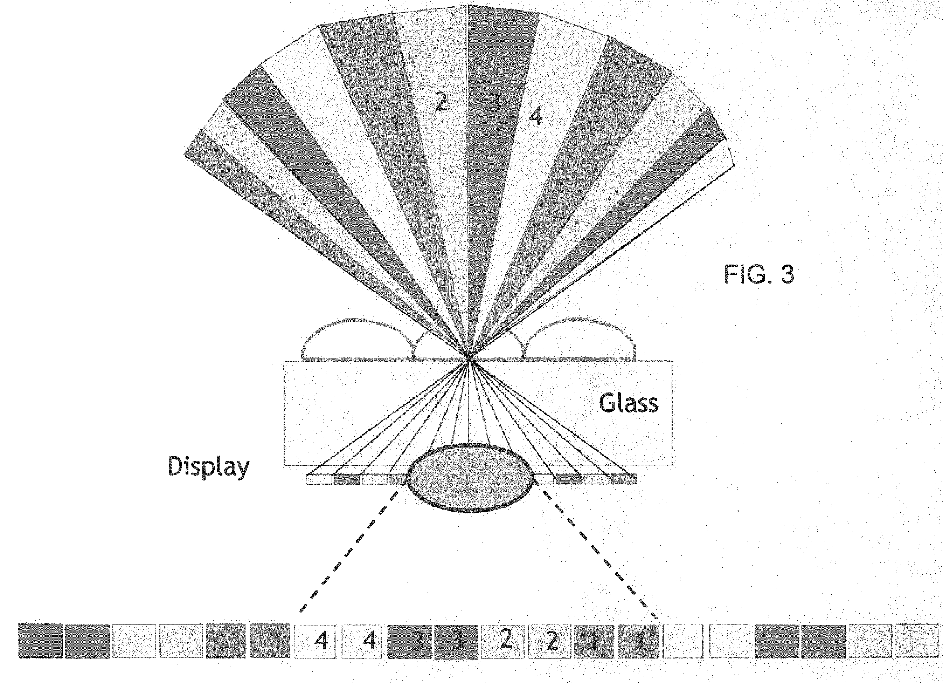

For example, FIG. 3 depicts a high level block diagram of an arrangement of micro-lenses on the glass of a theoretical ultra-high-definition (UHD) AS-3D display, the micro-lenses having perfect placement. That is, the AS-3D display 300 of FIG. 3 illustratively comprises a glass panel 302, a plurality of micro-lenses, collectively 304 and a plurality of pixels, collectively 306. The example of FIG. 3 comprises a 4-view display in which illustratively two, adjacent sub-pixel are used for one view in, for example, a 4K display. The arrangement of FIG. 3 can also be accomplished using 4 sub-pixels per view using, for example an 8K display. That is, in the arrangement of FIG. 3, instead of having one sub-pixel to generate one view, there are p sub-pixels to generate one view.

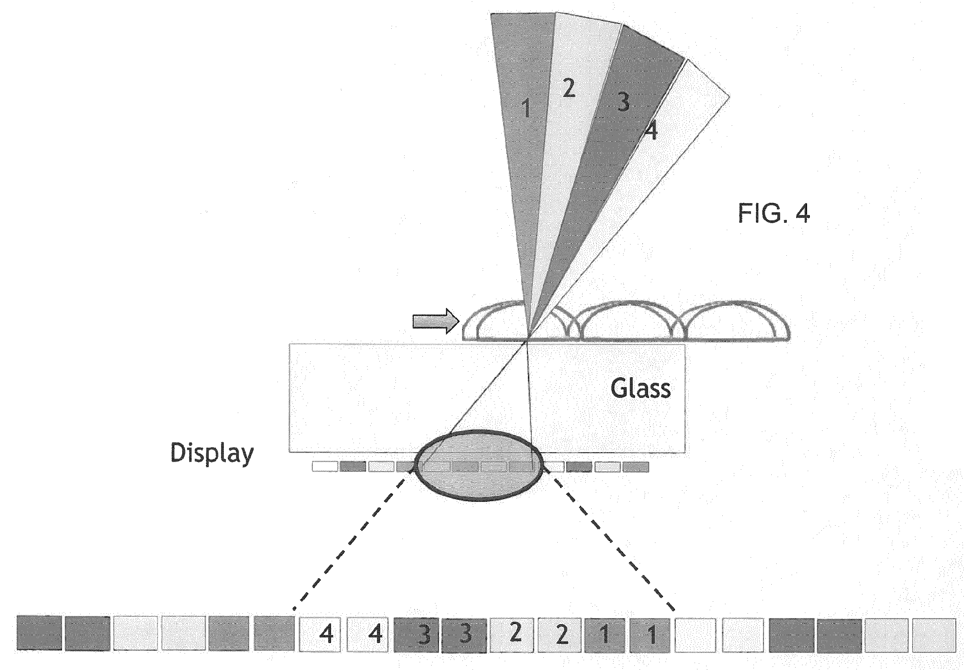

FIG. 4 depicts a high level block diagram of an arrangement of micro-lenses on the glass of a manufactured UHD AS-3D display, the placement of the micro-lenses containing errors in the location of the micro-lenses. The AS-3D display 400 of FIG. 4 illustratively comprises a glass panel 402, a plurality of micro-lenses, collectively 404 and a plurality of pixels, collectively 406. The example of FIG. 2 comprises a 4-view display in which two sub-pixels are used for one view. In the AS-3D display 400 of FIG. 4, due to, for example manufacturing process errors, the side lenses are shifted versus theoretical position, creating double image issues and crosstalk between views.

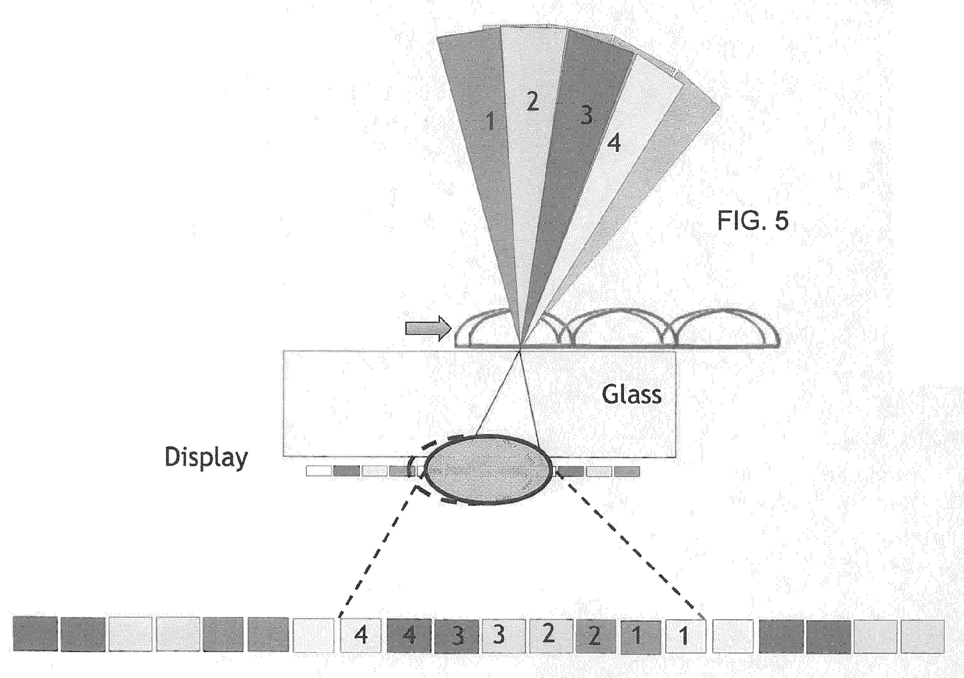

As previously recited, in at least one embodiment of the present principles, the angular errors in the placement of micro-lenses or barriers on the glass (LCD) of a UHD display, such as an UHD AS-3D display, due to, for example manufacturing errors, are corrected by shifting N views at a sub-pixel level using higher resolution panels. More specifically, FIG. 5 depicts a high level block diagram of the UHD AS-3D display of FIG. 4 in which an embodiment of the present principles has been applied to correct for incorrect placement of the micro-lenses of the UHD display 400 in accordance with an embodiment of the present principles. As depicted in FIG. 5, the sub-pixels used to create the 4 views of the display have been changed to correct for the incorrect placement of the micro-lenses of the UHD display 400. More specifically, in the embodiment of FIG. 5, the sub-pixels used to create the 4 views for the display 400 have been illustratively shifted in accordance with an embodiment of the present principles one sub-pixel to the right. As such, having shifted the sub-pixels used to create the 4 views for the display 400, each view (1-4) will converge into an optimum area (e.g., correct eye position) for viewing 3D. In accordance with various embodiments of the present principles, p-sub-pixels are grouped differently depending on their position on the screen to compensate for lens (barriers) bad positioning.

In accordance with one embodiment of the present principles, during the quality analysis process of a display in the factory, a displacement map of the lens array is measured at a pixel or group of pixels level and such information is downloaded into a look up table. Such a table can then be used by a processing unit so that corresponding pixel values can be shifted depending on the value of the correction to make. In one embodiment of the present principles, a displacement map includes a mapping of the lenses of a lens array on the glass of a display and information regarding a displacement value for each lens of the lens array which indicates a misplacement of a respective lens due to, for example, manufacturing errors and limitations.

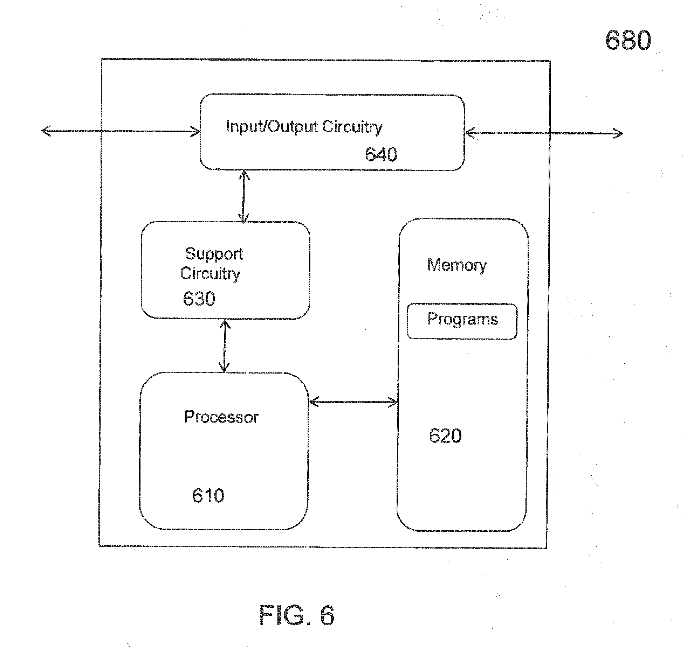

Fig. 6 depicts a high level block diagram of an apparatus for correcting for errors of stereoscopic displays in accordance with an embodiment of the present principles. In the embodiment of Fig. 6, the apparatus 600 is illustratively depicted as display controller 680. The display controller 680 of FIG. 6 illustratively comprises a processor 610 as well as a memory 620 for storing control programs/software routines, display information and the like. The processor 610 cooperates with conventional support circuitry 630 such as power supplies, clock circuits, cache memory and the like as well as circuits that assist in executing the software routines stored in the memory 620. As such, it is contemplated that some of the process steps discussed herein as software processes can be implemented within hardware, for example, as circuitry that cooperates with the processor 610 to perform various steps. The display controller 680 also contains input-output circuitry 640 that forms an interface between various functional elements communicating with the processing apparatus.

Although the display controller 680 of FIG. 6 is depicted as a general purpose computer that is programmed to perform various control functions in accordance with the present principles, the invention can be implemented in hardware, for example, as an application specified integrated circuit (ASIC). As such, the process steps described herein are intended to be broadly interpreted as being equivalently performed by software executed by a processor, hardware, or a combination thereof. In addition, although the display controller 680 of FIG. 6 is depicted as an integrated component of the display 605, the functionalities of the display controller 680 in accordance with the concepts and embodiments of the present principles described herein can take the form of an external component for controlling a display such as a set-top box, server and the like.

In one embodiment of the present principles, a display controller of the present principles, such as the display controller 680 of FIG. 6, receives information regarding a displacement of the lenses of a lens array or parallax barrier on the glass of a display. In one embodiment of the present principles and as described above, a display controller of the present principles can receive such information from a manufacturer of the display at which, during the quality analysis process of a display in the factory, a displacement map of the lens array/parallax barrier is measured at a pixel or group of pixels level. Such information can then be downloaded into a look up table and communicated to the display controller.

Having such information, a display controller of the present principles makes a determination as to a sub-pixel shift required to correct for the displacement of the lenses of the lens array/parallax barrier on the glass of the display, such as the UHD AS-3D display. That is and as described above, in accordance with various embodiments of the present principles, displacement errors in lenses of a lens array/parallax barrier due to, for example manufacturing limitations, can be corrected by shifting, at a sub-pixel level, which sub-pixels are used to create the views for a display, such as a UHD AS-3D display. In one embodiment described above, depending on the size of a display and the sizes of the sub-pixels, an estimation of how big a sub-pixel shift is required to compensate for a known displacement error can be determined.

For example, in one embodiment if a lens/barrier is shifted by x microns, a display controller of the present principles performs a sub-pixel shift of the same amount, x micron, to correct for the misplacement of the lens/barrier. In one example, if a display comprises a one meter large 8K resolution display, there are 3 x 8192 sub-pixels per line and the sub-pixel size is about 40 microns. In such an arrangement, if the lens barrier shift (misplacement) is less than 20 microns then no sub-pixel shift is performed. However, if the lens barrier shift is between 20 and 60 microns, a one sub-pixel shift can be performed to correct for the placement error. Alternatively, if the lens barrier shift is between 60 and 100 microns, a two sub-pixel shift is performed, and so on. Such a procedure can be performed for each view of the display. As previously described, the higher the display resolution, the more accurate the correction can be made because a more accurate shift can be made due to the greater number of sub-pixels per view.

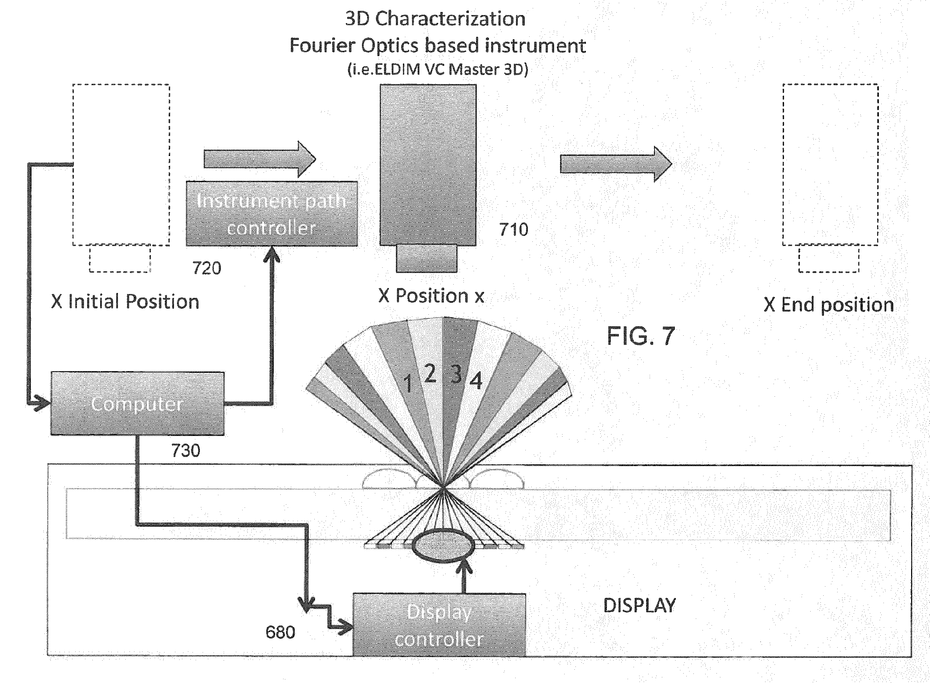

In an alternate embodiment of the present principles, a display controller of the present principles is incorporated into a measurement system. In such an embodiment, a trial and error process is used to determine a sub-pixel shift necessary to correct for misplacement of lenses of a lens array/parallax barrier. For example, FIG. 7 depicts a measurement system for measuring displacement of lenses of a lens array/parallax barrier on the glass of, for example, a UHD AS-3D display in accordance with an embodiment of the present principles.

The system 700 of FIG. 7 illustratively includes a 3D characterization device 710 based on Fourier Optics concept (for instance ELDIM VCMaster3D) for taking image measurements and an associated electro-mechanical device 720 enabling the incremental movement in the horizontal and vertical directions of the 3D characterization device 710. The 3D characterization data is acquired by a processing unit 730, which is in communication with the electro-mechanical device 720 and the display controller 680. In the embodiment of FIG. 7, for each position of the 3D characterization instrument, the 3D characterization device 710 measures the 3D image contrast. The processing unit 730 receives the 3D contrast data and communicates a request to the display controller 680 to shift the video display by one sub-pixel from the current pixel position as often as necessary in both the horizontal and the vertical direction until a maximum of the 3D contrast value is found. As such, an optimum sub-pixel shift vector is determined. Such a shift can be stored in a memory of the display controller 680 of the present principles. The 3D characterization as described above is then initiated at a new display position, if applicable, and the process is repeated. In alternate embodiments of the present principles, intermediate positions can be linearly interpolated by the display controller 680. Although in the embodiment of FIG. 7, the system 700 comprises a separate processing unit 730 and display controller 680, in alternate embodiments of the present principles, the processing unit 730 and display controller 680 can comprise a single, integrated component.

Generally, in accordance with embodiments of the present principles, a trial and error process is performed to approach a best 3D image to determine a sub-pixel shift required to correct for a displacement of lenses of a lens array/parallax barrier due to, for example, manufacturing and lens limitations. That is, a sub-pixel shift can be performed for a view and that view can be measured to determine, for example, the 3D image effect, and depending on the quality of the measured 3D effect, another sub-pixel shift can be performed to attempt to improve the image and that corrected image can again be measured and so on, until an acceptable image is measured. In one embodiment of the present principles, an acceptable image is considered an image with good 3D image effects (e.g., maximum 3D contrast) such that a viewer of the 3D image can determine the images viewed in 3D. As described above, such a procedure can be performed for each view of the display.

Having determined an amount of shift required to correct for placement errors of, for example, the lenses of a display, such as an UHD AS-3D, a shift of the sub-pixels originally used to generate the views for the displays is made in the amount determined for each view, to correct for the displacement of the lenses of the lens array/parallax barrier. That is, for images presented on the display, the display controller of the present principles shifts the sub-pixels of each view of the display, a respective amount determined for each view. More specifically, for images presented on the display, the display controller causes the display of images on the display to be generated by the sub-pixels determined to create the best image for each view.

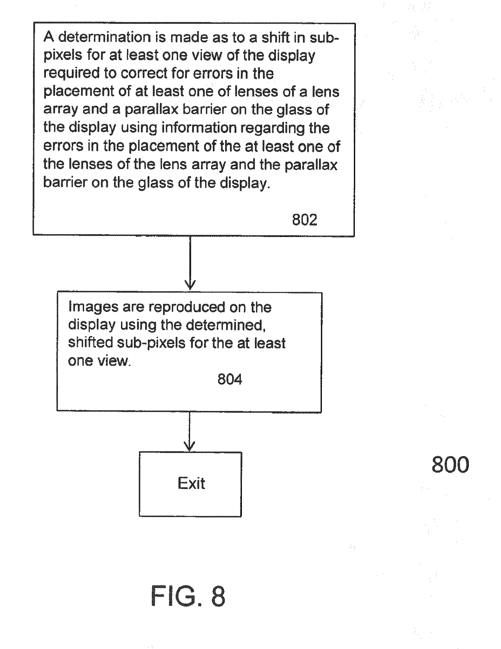

FIG. 8 depicts a flow diagram for a method 800 for correcting for errors of stereoscopic displays in accordance with an embodiment of the present principles. The method 800 begins at step 802 during which a determination is made as to a sub-pixel shift required to correct for the displacement of the lenses of the lens array/parallax barrier on the glass of the display, such as the UHD AS-3D display, using information regarding the errors in the placement of the at least one of the lenses of the lens array and the parallax barrier on the glass of the display. As described above, in one embodiment of the present principles, a display controller of the present principles receives information from a manufacturer of a display regarding displacement errors of lenses of a lens array/parallax barrier on the glass of a display. In one embodiment of the present principles, such information is received in a look up table. As further described above, in an alternate embodiment of the present principles, such information can be received from a measurement system which measures 3D image effects of a displacement of lenses of a lens array/parallax barrier on the glass of, for example, a UHD AS-3D display. The method 800 can then proceed to step 804.

At step 804, a shift of the sub-pixels originally used to generate the views for the displays is made in the amount determined for each view, to correct for the displacement of the lenses of the lens array/parallax barrier. That is, at step 806, a display controller in accordance with an embodiment of the present principles, causes the display of images to be displayed on the display using the determined, shifted sub-pixels. More specifically, in embodiments of the present principles, a display controller instructs a display to reproduce images of a view using sub-pixels determined to provide a best view as determined using the principles described above. The method 800 can then be exited.

The present description illustrates embodiments of the present principles. It will thus be appreciated that those skilled in the art will be able to devise various arrangements that, although not explicitly described or shown herein, embody the present principles and are included within its scope. That is, having described various embodiments for a method and apparatus for correcting for errors of stereoscopic displays (which are intended to be illustrative and not limiting), it is noted that modifications and variations can be made by persons skilled in the art in light of the above teachings. It is therefore to be understood that changes can be made in the particular embodiments of the present principles disclosed which are within the scope of the invention. While the forgoing is directed to various embodiments of the present principles, other and further embodiments of the present principles may be devised without departing from the basic scope thereof.

## Claims

1. A method for correcting for errors of a display, comprising:
determining a shift in sub-pixels for at least one view of the display required to correct for errors in the placement of at least one of lenses of a lens array and a parallax barrier on the glass of the display using information regarding the errors in the placement of the at least one of the lenses of the lens array and the parallax barrier on the glass of the display; and
reproducing images on the display using the determined, shifted sub-pixels for the at least one view.

2. The method of claim 1, wherein said information derives from a look up table including a displacement map of the errors in the placement of at least one of the lenses of the lens array and the parallax barrier on the display.

3. The method of claim 2, wherein said determining a shift comprises estimating an amount of a sub-pixel shift for the at least one view of the display dependent on an amount of placement error for at least one of the lenses of the lens array and the parallax barrier associated with the view.

4. The method of claim 1, wherein said information derives from measurements of a 3D image effect for images of the at least one view of the display.

5. The method of claim 4, wherein said determining comprises performing a trial and error process to determine the shift in sub-pixels.

6. The method of claim 5, wherein said trial and error process comprises:
performing a sub-pixel shift for a view;
reproducing images on the display using the shifted sub-pixels;
measuring a 3D image effect for images of the view; and
repeating the performing and measuring steps until a best 3D image effect is measured.

7. The method of claim 6, wherein a best 3D image effect comprises an image with a maximum 3D image contrast as compared with images displayed using any other respective sub-pixel combination for a view.

8. An apparatus for correcting for errors of a display comprising:
means for determining a shift in sub-pixels for at least one view of the display required to correct for errors in the placement of at least one of lenses of a lens array and a parallax barrier on the glass of the display using information regarding the errors in the placement of the at least one of the lenses of the lens array and the parallax barrier on the glass of the display; and
means for reproducing images on the display using the determined, shifted sub-pixels for the at least one view.

9. The apparatus of claim 8, wherein said apparatus comprises an integrated component of said display.

10. The apparatus of claim 8, wherein said apparatus comprises a display controller.

11. The apparatus of claim 8, wherein said apparatus receives a look up table including a displacement map of the errors in the placement of at least one of the lenses of the lens array and the parallax barrier to use to determine a shift in sub-pixels.

12. The apparatus of claim 11, wherein said shift is determined by estimating an amount of a sub-pixel shift for at least one view of the display dependent on an amount of placement error for at least one of the lenses of the lens array and the parallax barrier associated with the at least one view.

13. The apparatus of claim 8, wherein said apparatus receives measurements of a 3D image effect for images of at least one view of the display to use to determine the shift in sub-pixels.

14. The apparatus of claim 13, wherein a trial and error process is performed to determine the shift in sub-pixels.

15. The apparatus of claim 14, wherein said trial and error process is performed by:
performing a sub-pixel shift for a view;
reproducing images on the display for the at least one view using the shifted sub-pixels;
measuring a 3D image effect for the reproduced images of the at least one view; and
repeating the performing, reproducing and measuring steps until a best 3D image is measured.
